# EUROPÄISCHE PATENTSCHRIFT

(11) **EP 0 442 033 B1**
(45) Veröffentlichungstag und Bekanntmachung des Hinweises auf die Patenterteilung: **03.11.1993**
(21) Anmeldenummer: 90117143.9
(22) Anmeldetag: 06.09.1990
(51) Int. Cl.: F15B 13/00

(54) **Ventilbaugruppe**
Valve mounting structure
Unité de montage de valve

(30) Priorität: 16.02.1990 DE 4004834
(43) Veröffentlichungstag der Anmeldung: 21.08.1991
(73) Patentinhaber: Festo KG, D-73734 Esslingen (DE)
(72) Erfinder: Stoll, Kurt, Dipl.-Ing., D-7300 Esslingen (DE); Rüdle, Manfred, D-7300 Esslingen-Berkheim (DE)
(74) Vertreter: Magenbauer, Rudolf, Dipl.-Ing.

(56) Entgegenhaltungen:
- FR-A- 2 582 061
- FR-A- 2 617 565
- US-A- 4 726 393

## Beschreibung

Die Erfindung betrifft eine Ventilbaugruppe, mit einer fluidische Anschlußkanäle enthaltenden Anschlußplatte, die mit einem Hauptventil verbindbar ist, das mit den Anschlußkanälen kommunizierende Ventilkanäle enthält, und das mindestens einen Steuerkanal aufweist, über den ein zur Betätigung des Ventilgliedes des Hauptventiles erforderliches fluidisches Vorsteuersignal zugeführt wird, das von einem mit einer Druckversorgung kommunizierenden elektrisch betätigbaren und über elektrische Zuleitungen ansteuerbaren Vorsteuerventil erzeugt wird, das an einer Zwischenplatte angeordnet ist, die sich zwischen der Anschlußplatte und dem Hauptventil befindet und Zwischenkanäle aufweist, die die Anschlußkanäle mit den Ventilkanälen verbinden, und mit einer lösbaren elektrischen Steckverbindungseinrichtung, die zwischen der Anschlußplatte und der Zwischenplatte in die elektrischen Zuleitungen eingeschaltet ist, wobei in der Zwischenplatte das jeweilige Vorsteuerventil mit dem zwischenplattenseitigen Teil der Steckverbindungseinrichtungen verbindende elektrische Zuleitungsabschnitte verlaufen.

Eine Ventilbaugruppe dieser Art geht aus der FR-A-2,617,565 hervor. In ihrer Anschlußplatte sind Anschlußkanäle ausgebildet, die einerseits mit einer Druckmittelquelle, mit Verbrauchern, mit einer Druckmittelsenke o.dgl. verbindbar sind, und die andererseits, durch die Zwischenplatte hindurch, mit den Ventilkanälen des Hauptventiles kommunizieren. Zur Betätigung des Hauptventiles sind Vorsteuerventile vorgesehen, die elektrisch betätigbar sind. Zu diesem Zweck stehen die Vorsteuerventile an der Zwischenplatte mit in dieser verlaufenden Abschnitten der elektrischen Zuleitungen in Verbindung. Auf diese Weise wird die Anzahl frei zu verlegender elektrischer Leitungen verringert und man vermeidet Anschlußverwechslungen. Dazuhin erübrigt sich eine Hindurchführung elektrischer Signale durch das Hauptventil, weshalb dieses kompakte Abmessungen erhalten kann.

Im Falle der FR-A 2,617,565 sind die Vorsteuerventile fest an die Position des Hauptventiles gebunden. Das Vorsteuersignal wird unmittelbar am oder im Hauptventil erzeugt. Die Konstruktionen des Hauptventiles und der Vorsteuerventile müssen daher exakt aufeinander abgestimmt sein. Soll die Baugruppe mit zusätzlichen, zwischen Anschlußplatte und Hauptventil zwischenzuschaltenden Baugruppenelementen ergänzt werden, so muß gleichzeitig auch dafür gesorgt werden, daß die elektrische Energie den dann vorliegenden Spalt zwischen der Zwischenplatte und den davon abgehobenen Vorsteuerventilen überbrücken kann. Entsprechende Maßnahmen sind recht aufwendig und erfordern weitere Verbindungsstellen, an denen Kontaktprobleme auftreten können.

Es ist die Aufgabe der vorliegenden Erfindung, eine Ventilbaugruppe gemäß der eingangs genannten Art zu schaffen, die unabhängig von der Anbauweise des Hauptventiles einen einfachen und sicheren Stromanschluß der Vorsteuerventile ermöglicht.

Diese Aufgabe wird dadurch gelöst, daß die Zwischenplatte einen mit dem Steuerkanal des Hauptventiles kommunizierenden Vorsteuerkanal aufweist, wobei das mindestens eine Vorsteuerventil so an der Zwischenplatte angeordnet ist, daß es die Zufuhr des das Vorsteuersignal bildenden Druckmediums bezüglich des Vorsteuerkanales steuert, über welchen dem Steuerkanal des Hauptventiles das zur Ventilbetätigung benötigte Vorsteuersignal aus der Zwischenplatte zugeführt wird.

Diese Lösung ermöglicht es, trotz Optimierung der Stromversorgung der Vorsteuerventile auf Hauptventile gängiger Bauart zurückzugreifen. Weiterhin erübrigt sich eine Hindurchführung elektrischer Signale durch das jeweilige Hauptventil, weshalb dieses äußerst kompakte Abmessungen erhalten kann. Die Position der Zwischenplatte und der daran angeordneten Vorsteuerventile kann bezüglich der Anschlußplatte unverändert bleiben, selbst wenn die Baugruppe mit zusätzlichen Baugruppenelementen ausgerüstet wird, die zwischen die Anschlußplatte und das Hauptventil zwischengefügt werden und dadurch das Hauptventil von der Anschlußplatte entfernen. Die elektrische Signalübertragung zu den Vorsteuerventilen wird also nicht beeinträchtigt. Ergänzend wird das Vorsteuersignal nicht erst im Hauptventil erzeugt, sondern wird dessen jeweiligem Steuerkanal aus der mit den Vorsteuerventilen bestückten Zwischenplatte zugeführt, die zu diesem Zweck mit den Steuerkanälen kommunizierende Vorsteuerkanäle enthält. Das Hauptventil selbst kann also ohne direkt angesetztes Vorsteuerventil auskommen.

Vorteilhafte Weiterbildungen der Erfindung sind in den Unteransprüchen aufgeführt.

Vorzugsweise ist zur Druckversorgung des mindestens einen Vorsteuerventiles innerhalb der Zwischenplatte ein Zweigkanal ausgebildet, der einerseits mit dem mit dem Speisekanal der Anschlußplatte kommunizierenden Zwischenkanal und andererseits mit dem jeweiligen Vorsteuerventil in Verbindung steht. Es handelt sich hier um eine sehr wirtschaftliche Möglichkeit, um den Steuerdruck zum jeweiligen Vorsteuerventil zu führen.

Zweckmäßigerweise sind die Vorsteuerventile seitlich an der Zwischenplatte angeordnet, wo sich ein entsprechender Anbauplatz befinden kann, zu dem ein Leitungskanal ausmündet, in dem die Zuleitungsabschnitte verlegt sind. Da die Zwischenplatte keinerlei bewegbare Bauelemente aufweisen muß, ist genügend Platz für einen solchen Leitungskanal vorhanden. Er kann z.B. als bei angebautem Hauptventil bzw. bei angebautem sonstigem Bauelement abgedeckte Plattenvertiefung ausgebildet sein.

Wenn die Steckverbindungseinrichtung an den einander zugewandten Seiten der Anschlußplatte und der Zwischenplatte angeordnete Steckverbinder aufweist, die lösbar zusammensteckbar sind, stellt sich die elektrische Verbindung beim Anbau der Zwischenplatte automatisch ein.

Besonders einfach herstellbar ist eine aus Kunststoff bestehende Zwischenplatte. Wegen ihrer naturgemäß geringeren Festigkeit ist es hierbei jedoch vorteilhaft, wenn das auf sie folgende Hauptventil bzw. sonstige Baugruppenelement mit der Anschlußplatte verbunden und insbesondere verschraubt wird, wobei die Zwischenplatte dazwischen festgeklemmt wird. In diesem Falle treten in der Zwischenplatte keinerlei Gewindekräfte auf.

Nachfolgend wird die Erfindung anhand eines in der beigefügten Zeichnung abgebildeten Ausführungsbeispieles näher erläutert. Im einzelnen zeigen:
- Figur 1: eine erste Bauform der erfindungsgemäßen Ventilbaugruppe in perspektivischer Explosionsdarstellung größtenteils schematisch und
- Figur 2: die Ventilbaugruppe aus Figur 1 im zusammengebauten Zustand in Seitenansicht teilweise aufgebrochen.

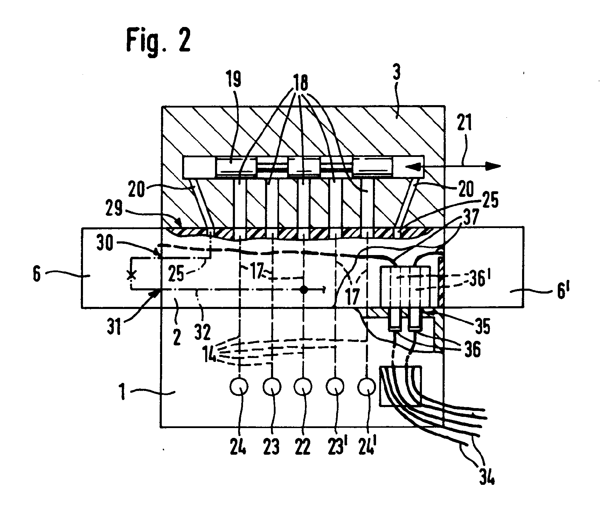

Die abgebildete Ventilbaugruppe besitzt einen in der bevorzugten Gebrauchsstellung zuunterst angeordneten und als Anschlußplatte 1 bezeichneten Anschlußkörper. Auf die Anschlußplatte 1 ist lösbar eine Zwischenplatte 2 aufsetzbar. Auf dieser wiederum ist ein Hauptventil 3 anordenbar, so daß in der bevorzugten Ausführungsform diese drei Baugruppenelemente in Höhenrichtung 10 übereinander gestapelt angeordnet sind. Bei Bedarf ist zwischen dem Hauptventil 3 und der Zwischenplatte 2 mindestens ein weiteres, lediglich strichpunktiert angedeutetes Baugruppenelement 4 anordenbar, bei dem bzw. denen es sich beispielsweise um eine sogenannte Reglerplatte und/oder Drosselplatte handeln kann. In Figur 2 sind solche zusätzlichen Baugruppenelemente 4 nicht angedeutet.

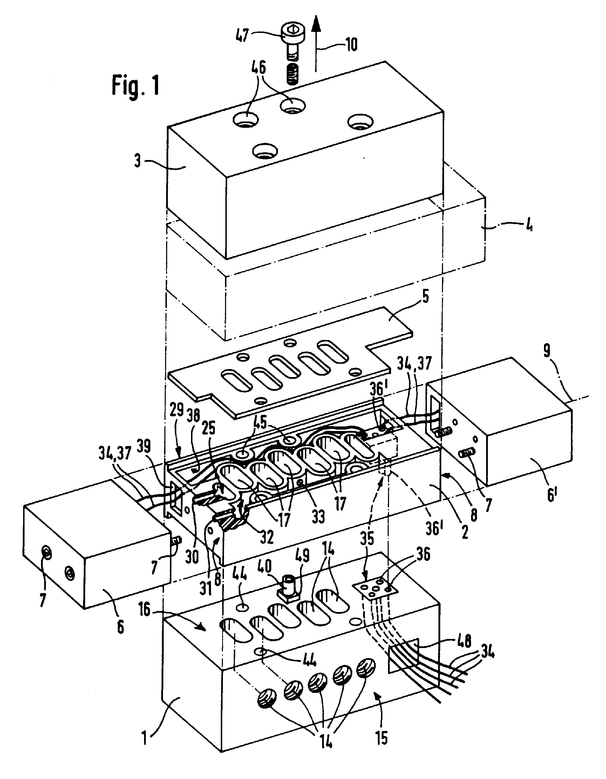

Zwischen die einzelnen Baugruppenelemente 1 bis 4 sind zweckmäßigerweise Dichtungen 5 zwischengefügt, die eine fluiddichte Verbindung gewährleistet. Der Übersichtlichkeit halber ist lediglich eine solche Dichtung in Figur 1 abgebildet.

Die beispielhafte Baugruppe verfügt außerdem über zwei elektrisch betätigbare Vorsteuerventile 6, 6'. Sie sind seitlich an der Zwischenplatte 2 lösbar festgelegt, beispielsweise mittels Schrauben 7. Bevorzugt hat die Zwischenplatte 2 wie abgebildet eine im wesentlichen quaderförmige Grundstruktur, wobei sich die beiden Anbauplätze 8 insbesondere an einander entgegengesetzten Stirnseiten der Zwischenplatte 2 befinden. Eine die beiden Vorsteuerventile 6, 6' und die Zwischenplatte 2 durchziehende gedankliche Längsachse 9 verläuft mithin rechtwinkelig zur Höhenrichtung 10.

In der Anschlußplatte 1 sind mehrere Anschlußkanäle 14 ausgebildet, hier: 5 Stück. Sie münden jeweils an einer Anschlußseite 15 aus, wo bei Bedarf Druckmittelleitungen, Schläuche oder dergleichen anschließbar sind. Andererseits öffnen sie sich zu der die Zwischenplatte 2 tragenden Bestückungsseite 16.

Die Zwischenplatte 2 besitzt in Höhenrichtung 10 durchgehende Zwischenkanäle 17 gleicher Anzahl wie die Anschlußkanäle 14, mit denen sie einerseits an der Bestückungsseite 16 kommunizieren. Die Zwischenkanäle 17 stehen andererseits, oben, mit Ventilkanälen 18 des Hauptventils 3 in Verbindung. Ein innerhalb des Hauptventils 3 bewegbar angeordnetes Ventilglied 19 - häufig als Ventilkolben bezeichnet - ist in der Lage, je nach Schaltstellung einzelne der Ventilkanäle 18 fluidisch miteinander zu verbinden oder voneinander zu trennen. Bei dem Hauptventil 3 handelt es sich um ein Mehrwegeventil, zum Beispiel ein 5/2-Wege-Ventil, dessen Aufbau und Funktionsweise dem Fachmann grundsätzlich bekannt ist, so daß sich vorliegend nähere Einzelheiten erübrigen. Es sei nur noch darauf verwiesen, daß in dem Hauptventil 3 mindestens ein und vorzugsweise zwei Steuerkanäle 20 vorgesehen sind, die wahlweise mit insbesondere pneumatischem Druckmedium beaufschlagbar oder belüftbar sind, um das Ventilglied 19 in die eine oder andere Schaltrichtung gemäß Pfeil 21 zu bewegen.

Einer der Anschlußkanäle 14 ist ein mit einer Druckmittelquelle verbindbarer Speisekanal 22. Die beiden links und rechts benachbarten Anschlußkanäle 14 sind vorzugsweise zu einem Verbraucher führende Verbraucherkanäle 23, 23'. Die beiden ganz außen liegenden Anschlußkanäle 14 sind zweckmäßigerweise Entlüftungskanäle 24, 24', sie können zum Beispiel an die Umgebung führen. Je nach Schaltstellung des Ventilglieds 19 kann somit wahlweise einer der beiden Verbraucherkanäle 23, 23' mit dem Speisekanal 22 verbunden werden, wobei gleichzeitig der andere Verbraucherkanal mit dem benachbarten Entlüftungskanal 24, 24' kommuniziert. An dieser Stelle sei jedoch darauf hingewiesen, daß die Erfindung keinesfalls auf die abgebildete fünfkanalige Ausführungsform beschränkt ist.

Den Druckmittel-Steuerimpuls erhalten die Steuerkanäle 20 von den beiden Vorsteuerventilen 6, 6'. Selbige beherrschen jeweils einen mit einem der Steuerkanäle 20 verbundenen und in der Zwischenplatte 2 ausgebildeten Vorsteuerkanal, indem sie die Zufuhr von Druckmittel bezüglich der genannten Vorsteuerkanäle 25 steuern. Beim Ausführungsbeispiel münden die in der Zwischenplatte 2 verlaufenden Vorsteuerkanäle 25 jeweils einerseits an der Ventilgliedseite 29 der Zwischenplatte 2, wo sie mit den gegenüberliegenden Steuerkanalmündungen kommunizieren, während sie jeweils andererseits am zugeordneten Anbauplatz 8 ausmünden (Mündung 30). Ein bei 31 ebenfalls zu jedem Anbauplatz 8 ausmündender Speise-Zweigkanal 32 liefert die Druckversorgung der Vorsteuerventile 6, 6', indem er mit dem mit dem Speisekanal 22 verbundenen mittleren der Zwischenkanäle 17 kommuniziert (bei 33). Der Zweigkanal 32 befindet sich vorteilhafterweise ebenfalls in der Zwischenplatte 2 und durchzieht diese im wesentlichen in Längsrichtung 9, um an den einander entgegengesetzten Anbauplätzen 8 auszumünden. Eine einfache Durchbrechung 33 der zwischen Zweigkanal 32 und dem betreffenden Zwischenkanal 17 stehenden Wand stellt die erforderliche Druckmittelverbindung her. Über die Vorsteuerventile 6, 6' kann also der Druckmitteldurchgang zwischen Zweigkanal 32 und Vorsteuerkanal 25 beeinflußt werden. Der innere Aufbau der Vorsteuerventile 6, 6' ist dem Fachmanne an sich bekannt, so daß auch hierzu sowie zur Funktionsweise der Vorsteuerventile keine Erläuterungen notwendig sind.

Die Vorsteuerventile 6, 6' des Ausführungsbeispieles verfügen über eine nicht näher dargestellte Elektromagnetanordnung zur Betätigung ihres Ventilgliedes. Es handelt sich also um sogenannte Magnetventile. Sie erhalten ihre zur Betätigung erforderliche elektrische Energie über elektrische Zuleitungen 34, die insbesondere kabelförmig ausgebildet sind. In den Verlauf dieser Zuleitungen 34 ist eine Steckverbindungseinrichtung 35 zwischengeschaltet, die im Bereich zwischen Anschlußplatte 1 und Zwischenplatte 2 angeordnet ist. Sie verfügt über zwei Sätze von Steckverbindern 36, 36', wovon sich je ein Satz an einer der beiden einander zugewandten Plattenseiten befindet.

Beispielsweise sind die anschlußplattenseitigen Steckverbinder 36 in Art von Steckaufnahmen ausgebildet, die praktisch zu einer steckdosenartigen Einheit zusammengefaßt sind und in die die in entsprechendem Schema angeordneten, zum Beispiel steckerförmigen Steckverbinder 36' der Zwischenplatte 2 lösbar einsteckbar sind. Auf diese Weise wird beim Aufsetzen der Zwischenplatte 2 auf die Anschlußplatte 1 automatisch der elektrische Steckkontakt hergestellt bzw. beim Abnehmen wieder gelöst. Ein aufwendiges zusätzliches Herstellen einer Steckverbindung erübrigt sich daher.

Die mit den Steckverbindern 36 der Anschlußplatte 1 verbundenen Zuleitungsabschnitte führen andererseits zu einer nicht näher dargestellten Steuereinrichtung und/oder Stromversorgung, von wo aus die erforderlichen Signale an die Vorsteuerventile 6, 6' ausgesandt werden können. Innerhalb der Zwischenplatte 2 verlaufen außerdem weitere elektrische Zuleitungsabschnitte 37, die einerseits an die Steckverbinder 36' der Zwischenplatte 2 und andererseits an die Vorsteuerventile 6, 6' angeschlossen sind. In der Zwischenplatte 2 ist zu diesem Zweck ein in Richtung der Längsachse 9 durchgehender Leitungskanal 38 ausgenommen, in dem die Zuleitungsabschnitte 37 verlegt sind. Weil der Leitungskanal 38 zu beiden Anbauplätzen 8 ausmündet - siehe die fensterartigen Mündungen 39 in Figur 1 - lassen sich die Zuleitungsabschnitte 37 problemlos an die Vorsteuerventile 6, 6' heranführen. Eine besonders günstige Raumaufteilung ergibt sich, wenn der Leitungskanal 38 auf der dem Zweigkanal 32 entgegengesetzten Seite der Zwischenkanäle 17 angeordnet ist, welche Zwischenkanäle 17 wie die zugeordneten Mündungen der Ventilkanäle 18 und der Anschlußkanäle 14 vorzugsweise in Richtung der Längsachse 9 aufeinanderfolgend angeordnet sind.

Während die Zuleitungsabschnitte 37 beim Ausführungsbeispiel steuerventilseitig festgelegt sind, ist es natürlich auch möglich, in die einzelnen Zuleitungsabschnitte 37 zwischen den Vorsteuerventilen und der Zwischenplatte ebenfalls eine lösbare Steckverbindungseinrichtung vorzusehen.

Zur einfacheren Herstellung ist es zweckmäßig, wenn der Leitungskanal 38 und/oder der Zweigkanal 32 als Vertiefungen ausgebildet sind, die von der Seite der Anschlußplatte 1 oder des Hauptventils 3 in die Zwischenplatte 2 eingebracht sind. Letzteres ist beim Ausführungsbeispiel der Fall, und der Abschluß der offenen Kanalseite erfolgt hier mittels einer aufgelegten Dichtung 5 und/oder des sich unmittelbar anschließenden Baugruppenelementes 3 bzw. 4.

Damit keine Isolationsprobleme auftreten, ist es von Vorteil, wenn die die Vorsteuerventile 6, 6' tragende Zwischenplatte 2 aus Kunststoff besteht. In diesem Falle sind die zugehörigen Steckverbinder 36' zweckmäßigerweise einstückig angeformt.

Nunmehr ist die Elektrik für alle vorhandenen Ventile in der Ebene der Zwischenplatte 2 zusammengefaßt. Über die Höhe der Zwischenplatte 2 hinaus sind keine weiteren elektrischen Verbindungen mehr erforderlich. Die Länge der vorhandenen Elektroverbindungen bleibt konstant, auch wenn das Hauptventil 3 infolge Zwischenfügens einer Regler- oder Drosselplatte oder dergleichen weiter von der Anschlußplatte 1 wegrücken würde. Nachdem zum Beispiel Reglerplatten bereits Steuerluftkanäle enthalten, weil sie sowohl für einfache Luftventile als auch für Magnetventile verwendet werden, kann über die Steuerluftkanäle problemlos die Verbindung zwischen den Vorsteuerkanälen 25 und den Steuerkanälen 20 hergestellt werden. Jedenfalls erübrigen sich auch in den zusätzlichen Baugruppenelementen elektrische Verbindungsmittel, so daß Baugruppenelemente üblicher Machart weiterhin Verwendung finden können. Ausgehend von der die Vorsteuerventile tragenden Zwischenplatte muß in Richtung zum Hauptventil 3 nur noch Steuerluft zur Ventilbetätigung gefördert werden, jedoch kein elektrisches Signal. Ein weiterer Vorteil besteht darin, daß das Hauptventil 3 beliebig durch ein Ventil anderer Funktionsweise ersetzt werden kann, ohne daß im Elektrikbereich eine Veränderung vorgenommen werden muß.

Sollte jedoch beispielsweise ein zur Betätigung nur ein Vorsteuerventil benötigendes Hauptventil 3 zum Einsatz kommen, so genügt es, eines der Vorsteuerventile 6, 6' durch eine Blindplatte zu ersetzen (nicht dargestellt) die je nach Ausführungsform einen dauernden oder keinen Durchlaß des Steuerdruckmediums vorgibt.

Um insbesondere bei Verwendung einer Kunststoff-Zwischenplatte einen sicheren Zusammenhalt der Ventilbaugruppe zu erzielen, ist es von Vorteil, wenn die Zwischenplatte 2 zwischen der Anschlußplatte 1 und dem an der entgegengesetzten Ventilseite 29 angeordneten Baugruppenelement, hier: dem Hauptventil 3, festklemmbar bzw. einspannbar ist. Auf diese Weise treten in der Zwischenplatte 2 keinerlei Gewindekräfte auf. Eine bevorzugte Ausgestaltung dieser Lösung ist in Figur 1 angedeutet. Hierbei werden stehbolzenartige Befestigungselemente 40 in den Befestigungslöchern 44 an der Bestückungsseite 16 zum Beispiel durch Einschrauben fest verankert. Es ergibt sich dabei ein sicherer Halt, weil die Anschlußplatte 1 aus Metall bestehen kann. Der nach oben vorstehende Abschnitt des Befestigungselementes 40 taucht von unten her in eine fluchtende, in Höhenrichtung 10 durchgehende Durchbrechung 45 der Zwischenplatte 2 hinein. An die Durchbrechung 45 schließt sich fluchtend eine das Hauptventil 3 durchdringende Befestigungsöffnung 46 an, in die von oben her ein zum Beispiel schraubenförmiges Verbindungselement 47 einführbar ist. Dieses ist durch die Befestigungsbohrung 46 und die zugeordnete Durchbrechung 45 hindurch lösbar fest mit dem Befestigungselement 40 verbindbar, zum Beispiel indem es mit diesem verschraubt werden kann. Somit entsteht eine zugankerartige Verbindung, wobei die Zwischenplatte 2 fest zwischen Hauptventil 3 und Anschlußplatte 1 festgespannt wird. Der Einfachheit halber ist in der Zeichnung nur eine der vorhandenen derartigen Befestigungseinrichtungen abgebildet.

Damit sich das Befestigungselement 40 nicht verdrehen kann, besitzt es einen Abschnitt 49 mit Mehrkantprofil, der passend in eine komplementäre Erweiterung der jeweils zugeordneten Durchbrechung 45 eintauchen kann (nicht dargestellt).

In Figur 1 ist bei 48 noch eine Ausnehmung der Anschlußplatte 1 angedeutet, durch die die Zuleitungen 34 von unten her an die innerhalb der Anschlußplatte gelegenen Anschlußstellen der Steckverbinder 36 herangeführt werden können.

## Patentansprüche

1. Ventilbaugruppe, mit einer fluidische Anschlußkanäle (14) enthaltenden Anschlußplatte (1), die mit einem Hauptventil (3) verbindbar ist, das mit den Anschlußkanälen (14) kommunizierende Ventilkanäle (18) enthält, und das mindestens einen Steuerkanal (20) aufweist, über den ein zur Betätigung des Ventilgliedes (19) des Hauptventiles (3) erforderliches fluidisches Vorsteuersignal zugeführt wird, das von einem mit einer Druckversorgung (22) kommunizierenden elektrisch betätigbaren und über elektrische Zuleitungen (34) ansteuerbaren Vorsteuerventil (6, 6') erzeugt wird, das an einer Zwischenplatte (2) angeordnet ist, die sich zwischen der Anschlußplatte (1) und dem Hauptventil (3) befindet und Zwischenkanäle (17) aufweist, die die Anschlußkanäle (14) mit den Ventilkanälen (18) verbinden, und mit einer lösbaren elektrischen Steckverbindungseinrichtung (35), die zwischen der Anschlußplatte (1) und der Zwischenplatte (2) in die elektrischen Zuleitungen (34) eingeschaltet ist, wobei in der Zwischenplatte (2) das jeweilige Vorsteuerventil (6, 6') mit dem zwischenplattenseitigen Teil (36') der Steckverbindungseinrichtungen (35) verbindende elektrische Zuleitungsabschnitte (37) verlaufen, dadurch gekennzeichnet, daß die Zwischenplatte (2) einen mit dem Steuerkanal (20) des Hauptventiles (3) kommunizierenden Vorsteuerkanal (25) aufweist, wobei das mindestens eine Vorsteuerventil (6, 6') so an der Zwischenplatte (2) angeordnet ist, daß es die Zufuhr des das Vorsteuersignal bildenden Druckmediums bezüglich des Vorsteuerkanales (25) steuert, über welchen dem Steuerkanal (20) des Hauptventiles (3) das zur Ventilbetätigung benötigte Vorsteuersignal aus der Zwischenplatte (2) zugeführt wird.

2. Ventilbaugruppe nach Anspruch 1, dadurch gekennzeichnet, daß innerhalb der Zwischenplatte (2) ein Zweigkanal (32) ausgebildet ist, der zur Druckversorgung des mindestens einen Vorsteuerventiles (6, 6') einerseits mit dem mit dem Speisekanal (14, 23) der Anschlußplatte (1) kommunizierenden Zwischenkanal (17) und andererseits mit dem jeweiligen Vorsteuerventil (6, 6') in Verbindung steht.

3. Ventilbaugruppe nach Anspruch 1 oder 2, dadurch gekennzeichnet, daß die Anschlußplatte (1), die Zwischenplatte (2) und das Hauptventil (3) in Höhenrichtung (10) übereinander gestapelt angeordnet sind, wobei sich die Vorsteuerventile (6, 6') seitlich an der Zwischenplatte (2) befinden.

4. Ventilbaugruppe nach einem der Ansprüche 1 bis 3, dadurch gekennzeichnet, daß die Vorsteuerventile (6, 6') Elektromagnetventile sind.

5. Ventilbaugruppe nach einem der Ansprüche 1 bis 4, dadurch gekennzeichnet, daß die Steckverbindungseinrichtung (35) an den einander zugewandten Seiten von Anschlußplatte (1) und Zwischenplatte (2) angeordnete Steckverbinder (36, 36') aufweist, wobei die an der Zwischenplatte (2) vorgesehenen Steckverbinder (36, 36') zweckmäßigerweise einstückig mit der Zwischenplatte (2) ausgebildet sind, zum Beispiel durch Anspritzen.

6. Ventilbaugruppe nach einem der Ansprüche 1 bis 5, dadurch gekennzeichnet, daß innerhalb der Zwischenplatte (2) ein Leitungskanal (38) ausgebildet ist, in dem die insbesondere als Kabel ausgebildeten elektrische Zuleitungsabschnitte (37) zwischen der Steckverbindungseinrichtung (35) und den Anbauplätzen (8) für die Vorsteuerventile (6, 6') verlegbar sind.

7. Ventilbaugruppe nach Anspruch 6, dadurch gekennzeichnet, daß der Leitungskanal (38) eine bei angebautem Hauptventil (3) abgedeckte Plattenvertiefung ist.

8. Ventilbaugruppe nach Anspruch 6 oder 7, dadurch gekennzeichnet, daß der Leitungskanal (38) zum jeweiligen Anbauplatz (8) hin ausmündet (39).

9. Ventilbaugruppe nach einem der Ansprüche 1 bis 8, dadurch gekennzeichnet, daß die Zwischenplatte (2) aus Kunststoff besteht.

10. Ventilbaugruppe nach einem der Ansprüche 1 bis 9, dadurch gekennzeichnet, daß zwischen der Zwischenplatte (2) und dem Hauptventil (3) noch mindestens ein weiteres Baugruppenelement (4) z.B. in Gestalt einer Regler- und/oder Drosselplatte anordenbar ist, welche zusätzlichen Baugruppenelemente (4) zweckmäßigerweise Steuerluftkanäle enthalten, die einerseits mit den Steuerkanälen (20) des Hauptventiles (3) und andererseits mit den Vorsteuerkanälen (25) der Zwischenplatte (2) kommunizieren.

11. Ventilbaugruppe nach Anspruch 9 oder 10, dadurch gekennzeichnet, daß die Zwischenplatte (2) zwischen der Anschlußplatte (1) und dem an der entgegengesetzten Seite angeordneten Baugruppenelement (3, 4) festklemmbar ist, wobei zweckmäßigerweise an der Anschlußplatte (1) mindestens ein in eine Ausnehmung der Zwischenplatte (2) hineinragendes stehbolzenartiges Befestigungselement (40) angebracht ist, mit dem eine das über der Zwischenplatte (2) angeordnete Baugruppenelement (3, 4) festlegende Schraube o.dgl. verbindbar ist, derart, daß eine zugankerartige Verbindung entsteht.

12. Ventilbaugruppe nach einem der Ansprüche 1 bis 11, dadurch gekennzeichnet, daß die Zwischenplatte (2) und die auf der Seite (29) des Hauptventiles (3) angeordneten Baugruppenelemente (3, 4) ausschließlich unelektrische Verbindungen aufweisen.

## Claims

1. Valve assembly, with a connection plate (1) containing fluid connection passages (14) and connectable to a main valve (3) containing valve passages (18) communicating with the connection passages (14), and having at least one control passage (20), through which is sent a fluid pilot signal necessary to activate the valve member (19) of the main valve (3), this signal being generated by a pilot valve (6, 6'), communicating with a pressure supply (22), electrically actuable and controllable via electrical leads (34), and mounted on an intermediate plate (2), which is located between the connection plate (1) and the main valve (3) and has intermediate passages connecting the connection passages (14) with the valve passages (18), and with a releasable electrical plug connection unit (35), connected to the electrical leads (34) between the connection plate (1) and the intermediate plate (2), wherein running in the intermediate plate (2) are electrical lead sections (37) connecting the respective pilot valve (6, 6') with the intermediate plate side section (36') of the plug connection unit (35), characterized in that the intermediate plate (2) has a pilot passage (25) communicating with the control passage (20) of the main valve (3), wherein at least one pilot valve (6, 6') is so arranged on the intermediate plate (2) that it controls the supply of the pressure medium forming the pilot signal in respect of the pilot passage (25), through which the pilot signal necessary for valve actuation is supplied from the intermediate plate (2) to the control passage (20) of the main valve (3).

2. Valve assembly according to claim 1, characterized in that formed within the intermediate plate (2) is a branch passage (32) which, for pressure supply of at least one pilot valve (6, 6') is connected at one end to the intermediate passage (17) communicating with the feed passage (14, 23) of the connection plate (1) and at the other end to the respective pilot valve (6, 6').

3. Valve assembly according to claims 1 or 2, characterized in that the connection plate (1), the intermediate plate (2) and the main valve (3) are stacked vertically above one another, with the pilot valves (6, 6') located to the side of the intermediate plate (2).

4. Valve assembly according to any of claims 1 to 3, characterized in that the pilot valves (6, 6') are solenoid valves.

5. Valve assembly according to any of claims 1 to 4, characterized in that the plug connection unit (35) has plug connectors (36, 36') mounted on the facing sides of the connection plate (1) and the intermediate plate (2), wherein the plug connectors (36, 36') provided on the intermediate plate (2) are expediently designed so as to be integral with the intermediate plate (2), for example by being moulded on.

6. Valve assembly according to any of claims 1 to 5, characterized in that within the intermediate plate (2) is formed a cable duct (38) in which can be laid the electrical lead sections (37), in particular in cable form, between the plug connection unit (35) and the attachment points (8) for the pilot valves (6, 6').

7. Valve assembly according to claim 6, characterized in that the cable duct (38) is a plate recess covered with the main valve (3) attached.

8. Valve assembly according to claims 6 or 7, characterized in that the cable duct (38) ends at the respective attachment point (39).

9. Valve assembly according to any of claims 1 to 8, characterized in that the intermediate plate (2) is made of plastic.

10. Valve assembly according to any of claims 1 to 9, characterized in that, between the intermediate plate (2) and the main valve (3) at least one further sub-assembly, e.g. in the form of a governor and/or restrictor plate, can be mounted, this additional sub-assembly expediently containing control air passages, communicating at one end with the control passages (20) of the main valve (3) and at the other end with the pilot passages (25) of the intermediate plate (2).

11. Valve assembly according to claims 9 or 10, characterized in that the intermediate plate (2) can be clamped in place between the connection plate (1) and the sub-assembly (3, 4) located on the opposite side with, expediently attached to the connection plate (1) at least one locking fastening element (40) projecting into a recess in the intermediate plate (2), and connectable with a bolt or the like fixing the sub-assembly (3, 4) located over the intermediate plate (2) in such a way that a tie bar-like connection is obtained.

12. Valve assembly according to any of claims 1 to 11, characterized in that the intermediate plate (2) and the sub-assembly (3, 4) mounted on the side (29) of the main valve (3) have exclusively non-electrical connections.

## Revendications

1. Ensemble de soupapes, avec une plaque de raccordement (1) contenant des canaux de raccordement hydrauliques (14) et susceptible d'être reliée à une soupape principale (3), contenant des canaux de soupape (18) communiquant avec les canaux de raccordement (14), et présentant au moins un canal de commande (20), par l'intermédiaire duquel est amené un signal de pilotage hydraulique, nécessaire à l'actionnement de l'organe de soupape (19) de la soupape principale (3) et produit par une soupape de pilotage (6,6') susceptible d'être actionnée électriquement et communiquant avec une alimentation de pression (22) et pouvant être commandée par des lignes électriques d'alimentation (34), soupape de pilotage (6,6') disposée sur une plaque intermédiaire (2), se trouvant entre la plaque de raccordement (1) et la soupape principale (3) et présentant des canaux intermédiaires (17) reliant les canaux de raccordement (14) aux canaux de soupape (18) et avec un dispositif de liaison électrique à fiches (35) susceptible d'être désolidarisé, mis en circuit dans les lignes électriques d'alimentation (34), entre la plaque de raccordement (1) et la plaque intermédiaire (2), dans lequel, dans la plaque intermédiaire (2), s'étendent des tronçons de lignes électriques d'alimentation (37) reliant la soupape de pilotage (6,6') respective avec la partie (36'), située du côté plaque intermédiaire, des dispositifs de liaison à fiches (35), **caractérisé en ce que** la plaque intermédiaire (2) présente un canal de pilotage (25), communiquant avec le canal de commande (20) de la soupape principale (3), la ou chaque soupape de pilotage (6,6') étant disposée sur la plaque intermédiaire (2), de telle façon qu'elle commande l'amenée du fluide sous pression, constituant le signal de pilotage, concernant le canal de pilotage (25), par lequel le signal de pilotage nécessaire à l'actionnement de la soupape est amené, depuis la plaque intermédiaire (2), au canal de commande (20) de la soupape principale (3).

2. Ensemble de soupapes selon la revendication 1, caractérisé en ce qu'à l'intérieur de la plaque intermédiaire (2) est réalisé un canal formant une dérivation (32), relié, pour assurer l'alimentation en pression de la ou chaque soupape de pilotage (6,6'), d'une part, au canal intermédiaire (17) communiquant avec le canal d'alimentation (14,23) de la plaque de raccordement (1) et relié, d'autre part, à la soupape de pilotage (6,6') respective.

3. Ensemble de soupapes selon la revendication 1 ou 2, caractérisé en ce que la plaque de raccordement (1), la plaque intermédiaire (2) et la soupape principale (3) sont disposées selon un empilage vertical, dans la direction de la hauteur (10), les soupapes de pilotage (6,6') se trouvant sur le côté de la plaque intermédiaire (2).

4. Ensemble de soupapes selon l'une des revendications 1 à 3, caractérisé en ce que les soupapes de pilotage (6,6') sont des électrovannes.

5. Ensemble de soupapes selon l'une des revendications 1 à 4, caractérisé en ce que le dispositif de liaison à fiches (35) présente, sur les faces, tournées l'une vers l'autre, de la plaque de raccordement (1) et de la plaque intermédiaire (2), des raccords à fiches (36,36'), les raccords à fiches (36,36') prévus sur la plaque intermédiaire (2) étant réalisés de manière avantageuse d'un seul tenant avec la plaque intermédiaire (2), par exemple par surmoulage.

6. Ensemble de soupapes selon l'une des revendications 1 à 5, caractérisé en ce qu'à l'intérieur de la plaque intermédiaire (2) est réalisé un canal de guidage (38), dans lequel les tronçons de lignes électriques d'alimentation (37), réalisés en particulier sous forme de câbles, peuvent être posés entre le dispositif de liaison à fiches (35) et les emplacements de montage (8) des soupapes de pilotage (6,6').

7. Ensemble de soupapes selon la revendication 6, caractérisé en ce que le canal de guidage (38) est une cavité ménagée dans la plaque, qui est recouverte lorsque la soupape principale (3) est montée.

8. Ensemble de soupapes selon la revendication 6 ou 7, caractérisé en ce que le canal de guidage (38) débouche (en 39) à l'emplacement de montage respectif (8).

9. Ensemble de soupapes selon l'une des revendications 1 à 8, caractérisé en ce que la plaque intermédiaire (2) est réalisée en matière synthétique.

10. Ensemble de soupapes selon l'une des revendications 1 à 9, caractérisé en ce qu'entre la plaque intermédiaire (2) et la soupape principale (3) est susceptible d'être disposé encore au moins un autre élément d'ensemble (4), par exemple sous la forme d'une plaque pour régulateur et/ou dispositif d'étranglement, ces éléments d'ensemble supplémentaires (4) contenant avantageusement des canaux d'air de commande, communiquant d'une part avec les canaux de commande (20) de la soupape principale (3) et d'autre part avec les canaux de pilotage (25) de la plaque intermédiaire (2).

11. Ensemble de soupapes selon les revendication 9 ou 10, caractérisé en ce que la plaque intermédiaire (2) est susceptible d'être fixée par serrage entre la plaque de raccordement (1) et l'élément d'ensemble (3,4) disposé du côté opposé, et en ce que, avantageusement, est monté sur la plaque de raccordement (2) au moins un élément de fixation (40) en forme de tige, pénétrant dans un évidement de la plaque intermédiaire (2), auquel une vis, assurant la fixation de l'élément d'ensemble (3,4) disposé sur la plaque intermédiaire (2) ou analogue est susceptible d'être reliée, de telle façon que soit crée une liaison du genre tirant.

12. Ensemble de soupapes selon l'une des revendications 1 à 11, caractérisé en ce que la plaque intermédiaire (2) et les éléments d'ensemble (3,4) disposés sur le côté (29) de la soupape principale (3) présentent exclusivement des liaisons non électriques.
